# EUROPEAN PATENT SPECIFICATION

(11) **EP 3 072 044 B1**
(45) Date of publication and mention of the grant of the patent: **02.01.2019**
(21) Application number: 14863339.9
(22) Date of filing: 12.11.2014
(51) Int. Cl.: G06F 9/44

(54) **ZERO DOWNTIME DEPLOYMENT AND ROLLBACK**
BEREITSTELLUNG UND ROLLBACK OHNE AUSFALLZEIT
DÉPLOIEMENT ET ANNULATION SANS TEMPS D'ARRÊT

(30) Priority: 19.11.2013 US 201361906253 P; 30.10.2014 US 201414528916
(43) Date of publication of application: 28.09.2016
(73) Proprietor: eBay Inc., San Jose, CA 95125 (US)
(72) Inventor: MATHEW, Suresh, Sunnyvale, California 94087 (US); DESAI, Jigar Chandrakant, Fremont, California 94539 (US); RETHINAKALEESWARAN, Kumar, San Jose, California 95129 (US); SINGARAM, Narayanan, Fremont, California 94536 (US); BATTA, Krishnakanth, San Jose, California 95133 (US)
(74) Representative: Schwegman Lundberg Woessner Limited
(86) International application number: PCT/US2014/065310
(87) International publication number: WO 2015/077103

(56) References cited:
- US-A1- 2006 111 880
- US-A1- 2013 036 328
- US-B1- 7 401 338
- US-B1- 7 822 826
- Anonymous: "Free Programmer's Blog | Linux 3.9 introduced new way of writing socket servers", , 28 August 2013 (2013-08-28), XP055331382, Retrieved from the Internet: URL:https://web.archive.org/web/2013082806 1816/http://freeprogrammersblog.vhex.net/p ost/linux-39-introdued-new-way-of-writing- socket-servers/2? [retrieved on 2016-12-22]

## Description

### TECHNICAL FIELD

Embodiments of the present disclosure relate generally to computer technology and, more particularly, but not by way of limitation, to zero downtime deployment and rollback.

### BACKGROUND

Implementing an application on a server computer often involves a period of downtime associated with the server computer. In a typical scenario, a new version of an application is implemented by disabling network traffic to the server computer, stopping the current version of the application, undeploying the current version of the application, deploying the new version of the application, starting the new version of the application, and finally enabling network traffic to the server computer. When implementing an application to a large number of server computers at a high frequency, the downtime can be significant and costly.

A document entitled "Free Programmer's Blog | Linux 3.9 introduced new way of writing socket servers", 28 August 2013, XP055331382 (https://web.archive.org/web/20130828061816/http://freeprogrammers blog.vhex .net/post/inux-39-introduced-new-way-of-writing-socjet-servers/s? discloses a method in the Linux kernel 3.9 to bind multiple listening sockets to the same port using the SO_REUSEPORT option to hotswap network services.

### SUMMARY

The present invention provides a computer system and computer implemented method as defined in the appended claims.

### BRIEF DESCRIPTION OF THE DRAWINGS

Various ones of the appended drawings merely illustrate example embodiments of the present disclosure and should not be considered as limiting its scope.
**FIG. 1** is a block diagram illustrating a networked system, according to some example embodiments.
**FIG. 2** is a block diagram illustrating an example embodiment of an implementation system, according to some example embodiments.
**FIG. 3** is a block diagram illustrating communicative coupling between a load balancer and a server computer in an example scenario, according to some example embodiments.
**FIG. 4** is a flow diagram illustrating an example method for implementing an application on a server computer, according to some example embodiments.
**FIG. 5** is a flow diagram illustrating an example method for implementing an application on a server computer using simultaneous application binding, according to some example embodiments.
**FIG. 6** is a flow diagram illustrating an example method for setting binding options for a port of a server computer, according to some example embodiments.
**FIG. 7** is a flow diagram illustrating an example method for rolling back an implementation of an application on a server computer, according to some example embodiments.
**FIG. 8** illustrates a diagrammatic representation of a machine in the form of a computer system within which a set of instructions may be executed for causing the machine to perform any one or more of the methodologies discussed herein, according to an example embodiment.

The headings provided herein are merely for convenience and do not necessarily affect the scope or meaning of the terms used.

### DETATLED DESCRIPTION

The description that follows includes systems, methods, techniques, instruction sequences, and computing machine program products that embody illustrative embodiments of the disclosure. In the following description, for the purposes of explanation, numerous specific details are set forth in order to provide an understanding of various embodiments of the inventive subject matter. It will be evident, however, to those skilled in the art, that embodiments of the inventive subject matter may be practiced without these specific details. In general, well-known instruction instances, protocols, structures, and techniques are not necessarily shown in detail.

To serve network traffic on a massive scale, a large number of servers running a particular version of an application can be employed. For example, a pool comprising tens of thousands of servers may be running a particular application to meet network traffic demands. Traditional techniques to update or implement a version of an application can cause downtime. Even a few minutes of downtime per update can add up to many days of downtime when updating at high frequency across a large pool of servers.

In an example, which is not an embodiment of the claimed invention, delayed port binding can be employed to implement one or more applications to one or more server computers with near zero downtime. In this embodiment, a first application is running and bound to a port on the server computer. A second application is deployed to the server computer and started without binding to the port. In this embodiment, network traffic being received at the server computer is disabled subsequent to the second application being deployed and started. The first application is then unbound from the port. Immediately following the first application being unbound from the port, the second application is bound to the port and the network traffic to the server computer is enabled. In this way, the downtime for the server is minimized by first preparing the second application, and then performing an exchange of applications that are bound to the port. In various embodiments, this technique can be used where the server computer or the port of the application is configured to allow one application to be bound to the port at a time.

In one example embodiment, an application may be deployed with zero downtime using an advanced port binding technique. In this example embodiment, the first application is bound to the port of the server computer and subsequently serves network traffic received at the server computer. In various embodiments, the first application is bound to the port using a server computer option allowing for binding of more than one application to the port at the same time (e.g., a socket option such as SO_REUSEPORT). The second application may be deployed to the server computer and started without being bound to the port. Subsequently, the second application is bound to the same port as the first application while the first application is serving network traffic. Thus, in this embodiment, the first application and the second application are bound to the port at the same time while the server computer is serving network traffic. After the second application is bound to the port, the first application is unbound and undeployed. In this embodiment, network traffic received at the server computer is continuously served throughout a deployment lifecycle of the second application and un-installation of the first application. In this way, the second application can be deployed on the server computer with zero downtime.

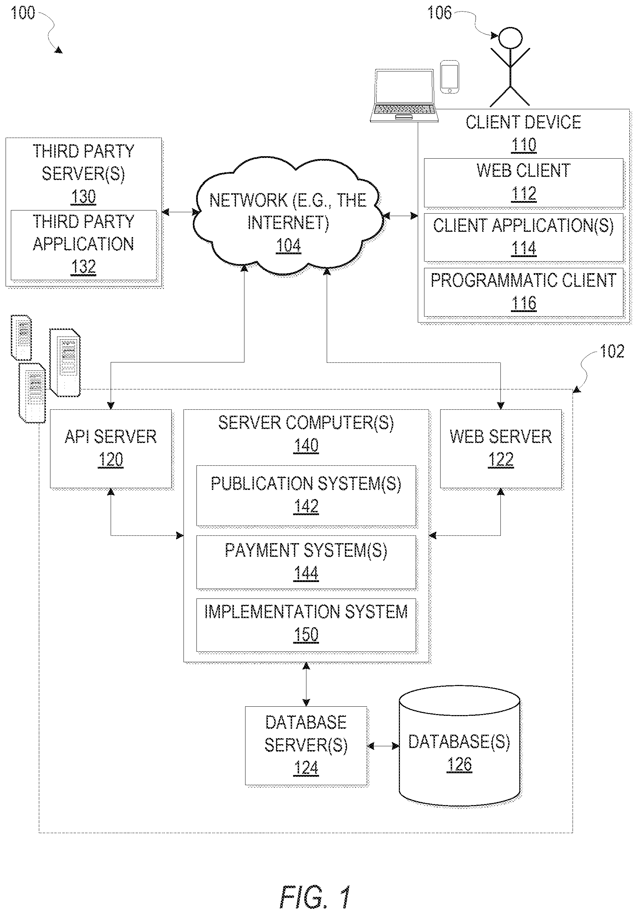

With reference to **FIG. 1****,** an example embodiment of a high-level client-server-based network architecture **100** is shown. A networked system **102** provides server-side functionality via a network **104** (e.g., the Internet or wide area network (WAN)) to a client device **110.** In some implementations, a user (e.g., user **106**) interacts with the networked system **102** using the client device **110**. **FIG. 1** illustrates, for example, a web client 112 (e.g., a browser, such as the Internet Explorer® browser developed by Microsoft® Corporation of Redmond, Washington State), client application(s) **114**, and a programmatic client **116** executing on the client device **110**. The client device **110** includes the web client **112**, the client application(s) **114**, and the programmatic client **116** alone, together, or in any suitable combination. Although **FIG. 1** shows one client device **110,** in other implementations, the network architecture **100** comprises multiple client devices.

In various implementations, the client device **110** comprises a computing device that includes at least a display and communication capabilities that provide access to the networked system **102** via the network **104.** The client device **110** comprises, but is not limited to, a remote device, work station, computer, general purpose computer, Internet appliance, hand-held device, wireless device, portable device, wearable computer, cellular or mobile phone, Personal Digital Assistant (PDA), smart phone, tablet, ultrabook, netbook, laptop, desktop, multi-processor system, microprocessor-based or programmable consumer electronic, game consoles, set-top box, network Personal Computer (PC), mini-computer, and so forth. In an example embodiment, the client device **110** comprises one or more of a touch screen, accelerometer, gyroscope, biometric sensor, camera, microphone, Global Positioning System (GPS) device, and the like.

The client device **110** communicates with the network **104** via a wired or wireless connection. For example, one or more portions of the network **104** comprises an ad hoc network, an intranet, an extranet, a Virtual Private Network (VPN), a Local Area Network (LAN), a wireless LAN (WLAN), a Wide Area Network (WAN), a wireless WAN (WWAN), a Metropolitan Area Network (MAN), a portion of the Internet, a portion of the Public Switched Telephone Network (PSTN), a cellular telephone network, a wireless network, a Wireless Fidelity (Wi-Fi®) network, a Worldwide Interoperability for Microwave Access (WiMax) network, Bluetooth® networks, another type of network, or any suitable combination thereof,

In some example embodiments, the client device **110** includes one or more of the applications (also referred to as "apps") such as, but not limited to, web browsers, book reader apps (operable to read e-books), media apps (operable to present various media forms including audio and video), fitness apps, biometric monitoring apps, messaging apps, electronic mail (email) apps, and e-commerce site apps (also referred to as "marketplace apps"). In some implementations, the client application(s) **114** include various components operable to present information to the user and communicate with the networked system **102.** In some embodiments, if the e-commerce site application is included in the client device **110,** then this application is configured to locally provide the user interface and at least some of the functionalities with the application configured to communicate with the networked system **102,** on an as needed basis, for data or processing capabilities not locally available (e.g., access to a database of items available for sale, to authenticate a user, to verify a method of payment). Conversely, if the e-commerce site application is not included in the client device **110**, the client device **110** can use its web browser to access the e-commerce site (or a variant thereof) hosted on the networked system **102.**

In various example embodiments, the user (e.g., the user **106**) comprises a person, a machine, or other means of interacting with the client device **110.** In some example embodiments, the user is not part of the network architecture **100**, but interacts with the network architecture **100** via the client device **110** or another means. For instance, the user provides input (e.g., touch screen input or alphanumeric input) to the client device **110** and the input is communicated to the networked system **102** via the network **104.** In this instance, the networked system **102,** in response to receiving the input from the user, communicates information to the client device **110** via the network **104** to be presented to the user. In this way, the user can interact with the networked system **102** using the client device **110.**

An Application Program Interface (API) server **120** and a web server **122** are coupled to, and provide programmatic and web interfaces respectively to, one or more server computer(s) **140.** The server computer(s) **140** hosts one or more publication system(s) **142,** payment system(s) **144,** and a implementation system **150,** each of which comprises one or more modules or applications and each of which can be embodied as hardware, software, firmware, or any combination thereof. The server computer(s) **140** are, in turn, shown to be coupled to one or more database server(s) **124** that facilitate access to one or more information storage repositories or database(s) 126. In an example embodiment, the database(s) **126** are storage devices that store information to be posted (e.g., publications or listings) to the publication system(s) **142.** The database(s) **126** also stores digital good information in accordance with some example embodiments.

The web client **112** accesses the various systems of the networked system **102** (e.g., the publication system(s) **142**) via the web interface supported by the web server **122.** Similarly, the programmatic client **116** and client applications) **114** accesses the various services and functions provided by the networked system **102** via the programmatic interface provided by the API server **120.** The programmatic client **116** can, for example, be a seller application (e.g., the Turbo Lister application developed by eBay® Inc., of San Jose, California) to enable sellers to author and manage listings on the networked system **102** in an off-line manner, and to perform batch-mode communications between the programmatic client **116** and the networked system **102.**

Additionally, a third party application **132,** executing on third party server(s) **130**, is shown as having programmatic access to the networked system **102** via the programmatic interface provided by the API server **120**. For example, the third party application **132**, utilizing information retrieved from the networked system **102,** supports one or more features or functions on a website hosted by the third party. The third party website, for example, provides one or more promotional, marketplace, or payment functions that are supported by the relevant applications of the networked system **102.**

The publication system(s) **142** provides a number of publication functions and services to the users that access the networked system 102. The payment system(s) **144** likewise provides a number of functions to perform or facilitate payments and transactions. While the publication system(s) **142** and payment system(s) **144** are shown in **FIG. 1** to both form part of the networked system **102,** it will be appreciated that, in alternative embodiments, the payment system(s) **144** may form part of a payment service that is separate and distinct from the networked system **102.** In some example embodiments, the payment system(s) **144** may form part of the publication system(s) **142.**

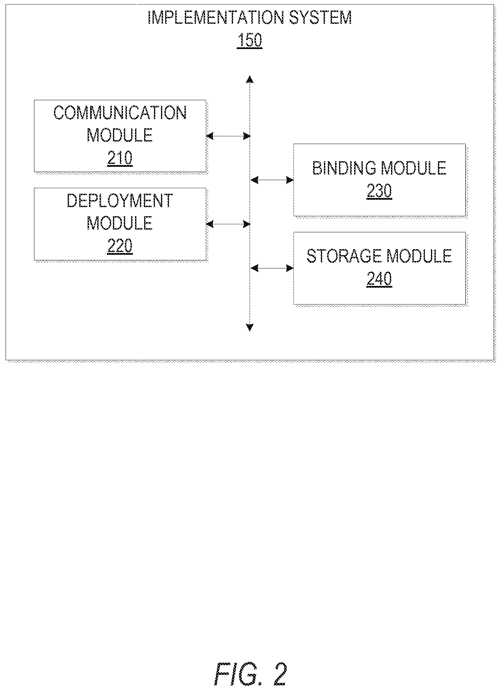

In various embodiments, the implementation system **150** provides functionality to deploy applications to a particular server computer. In some embodiments, the implementation system **150** can be part of any of the server computers of the server computer(s) **140** or another server computer. The implementation system **150** will be discussed further in connection with **FIG. 2** below.

Further, while the client-server-based network architecture **100** shown in **FIG. 1** employs a client-server architecture, the present inventive subject matter is, of course, not limited to such an architecture, and can equally well find application in a distributed, or peer-to-peer, architecture system, for example. The various systems of the applications server(s) **140** (e.g., the publication system(s) **142** and the payment system(s) **144**) can also be implemented as standalone software programs, which do not necessarily have networking capabilities.

**FIG. 2** is a block diagram of the implementation system **150** that provides functionality to deploy and roll back applications on a server computer, according to some example embodiments. For instance, the implementation system **150** can implement applications on the networked system **102.** Example applications include publication applications, auction applications, fixed-price applications, store applications, reputation applications, personalization applications, internationalization applications, navigation applications, imaging applications, listing creation (seller) applications, listing management (seller) applications, post-listing management applications, dispute resolution applications, fraud prevention applications, messaging applications, merchandizing applications, loyalty promotion applications. That is to say, in a scenario where a newer version of a particular application is deployed, and subsequently a prior version of the particular application is redeployed in-place of the newer version, the action of redeployment is referred to as a rollback. "Deployment," as used herein, is intended to include installing a particular application on a particular server computer including steps to configure the server computer to allow execution of the particular application.

In an example embodiment, the implementation system **150** includes a communication module **210**, a deployment module **220,** a binding module **230**, and a storage module **240**. All, or some, of the modules **210-240** of **FIG. 2****,** communicate with each other, for example, via a network coupling, shared memory, and the like. It will be appreciated that each of the modules **210-240** can be implemented as a single module, combined into other modules, or further subdivided into multiple modules. Other modules not pertinent to example embodiments can also be included, but are not shown.

The communication module **210** provides various communications functionality. For example, the communication module **210** manages network traffic being received at the server computer(s) **140** such as enabling or disabling network traffic to the server computer(s) **140.** In example embodiments, the communication module **210** exchanges network communications with the database server(s) **124**, the client device **110**, and the third party server(s) **130** (e.g., to facilitate access to a particular version of an application).

The deployment module **220** provides functionality to deploy or install applications on the server computer(s) **140**. For example, the deployment module **220** may deploy an application retrieved from a storage device, such as databases **126,** by storing the application at the server computer(s) **140** or another storage device accessible by the server computer(s) **140.** In some examples, the deployment module **220** configures the server computer(s) **140** so that the server computer(s) **140** is operable to run or execute the application.

The binding module **230** provides functionality to bind applications to ports or other shared resources on the server computer(s) **140**. For example, the binding module **230** binds a particular application to a particular port of the server computer(s) **140.** In another example, the binding module **230** unbinds the particular application from the particular port of the server computer(s) **140.** In some example embodiments, the binding module **230** configures the port with various settings. For instance, the binding module **230** can bind an application to the particular port of the particular server computer 140 with a port option, socket option, or other port setting that allows for binding of more than one application to the port at the same time.

The storage module **240** provides functionality to receive or retrieve applications (e.g., a new version of a particular server application) and maintain states of a particular application (e.g., store an application state for subsequent use). For example, the storage module **240** retrieves a new version of a particular application to be deployed on a particular server computer (e.g., server computer(s) **140)** from the databases **126.**

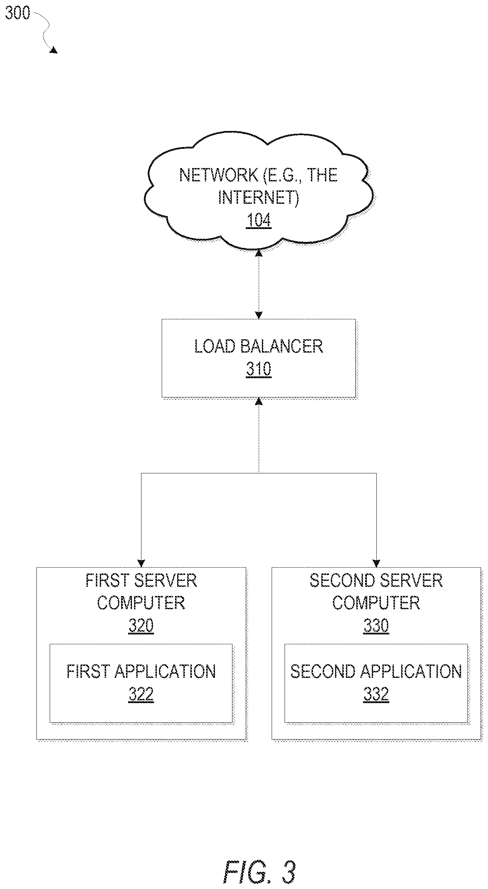

**FIG. 3** is a block diagram illustrating communicative coupling between a load balancer **310** and server computers such as one or more of the server computer(s) **140.** It will be appreciated that "server computer" as used herein is intended to include a computer machine communicatively coupled to a network (also referred to as a node on a network or network node). The load balancer **310** can be a device coupled to a first server computer **320** and a second server computer **330** or a software based load balancer that is implemented on a particular server computer. The load balancer **310** can be configured with more than one end point that can route network traffic to the end points. In this example embodiment, the first application and the second application can be on the same server computer or different server computers.

In example embodiments, the load balancer **310** is used, in part, to implement applications with limited or zero downtime. In one embodiment, the load balancer **310** is coupled to the first server computer **320** and the second server computer **330.** In this embodiment, a first application **322** is running and serving network traffic on the first server computer **320,** and a second application **332** is deployed on the second server computer **330.** The first application **322** may, for example, be an old version, and the second application **332** may be a new version of a particular server application.

The second application **332** can be deployed and started while the first application **322** on the first server computer **320** is serving network traffic. After starting the second application **332**, the load balancer **310** can route network traffic from the first server computer **320** to the second server computer **330.** In one embodiment, all or some of the network traffic is routed to the second server computer **330,** and the first application **322** in the first server computer **320** is then undeployed to conserve resources. In another embodiment, the first application **322** maintains a current state of the first application **322** and is not undeployed to allow for performing a rollback (e.g., redeploying the first application). In this embodiment, the load balancer **310** performs the rollback by routing network traffic from the second server computer **330** to the first server computer **320** running the first application **322** that has maintained the current state.

In other embodiments, the first application **322** and the second application **332** are on the same server computer. In these embodiments, the load balancer **310** distributes the network traffic between the first application **322** and the second application **332** on the same server computer.

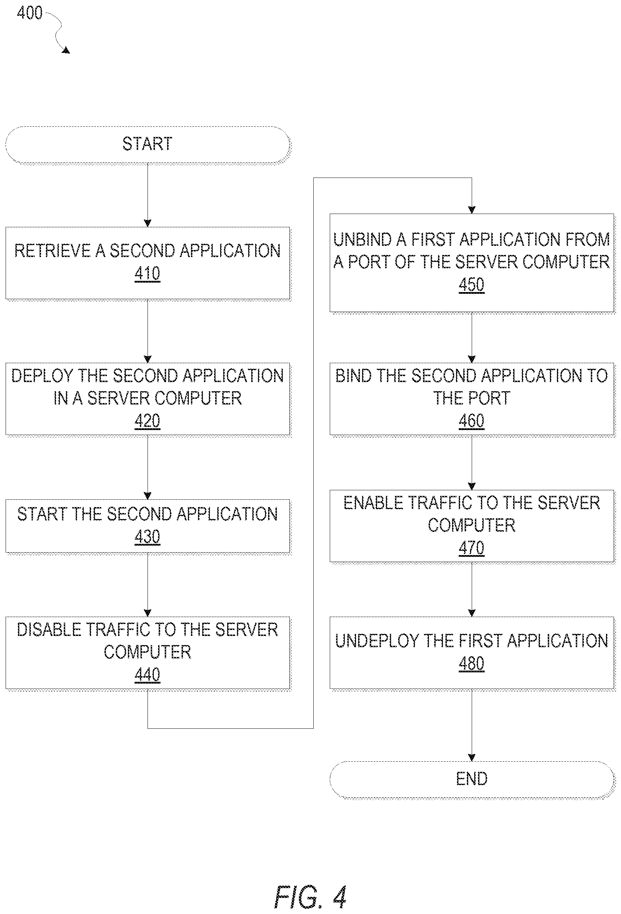

**FIG. 4** is a flow diagram illustrating an example method **400** for implementing an application on a server computer (e.g., the server computer(s) **140),** also referred to as a node, which is not in accordance with the claimed invention. At operation **410,** the storage module **240** retrieves, accesses, or otherwise obtains a second application from a storage device, such as database(s) **126,** or directly loaded from a network administration. In some instances, the communication module **210** receives the second application via the network **104.** In some instances, the second application is a new or replacement version of a first application.

At operation **420,** the deployment module **220** deploys the second application to the server computer (e.g., a particular node of the networked system **102).** For example, the deployment module **220** configures the server computer such that it is operable to execute or run the second application.

In an example instance, the server computer is running an operating system that allows two or more versions of a particular application to run at the same time (e.g., Apache Tomcat version 7 or higher). Allowing multiple versions of a particular application to run on a particular server computer at the same time is referred to herein as parallel deployment. For instance, a particular server computer can have prior versions of a particular application with a most recent version as a default version (e.g., the application that is designated to serve network traffic).

In a specific example, a particular application on the server computer with multiple applications can be designated to serve the network traffic using web application archive files (also referred to as WAR files) with WAR names separated by two pound symbols (#). For example, examplwebapp##1.war corresponds to the first application and examplewebapp##2.war corresponds to the second application. The first application and the second application can coexist within the same context on a parallel deployment enabled server computer. In this example, the examplewebapp##2.war that corresponds to the second application is designated to server traffic by default since it is the most recent version of a particular application (examplewebapp). In an embodiment, the deployment module **220** deletes or removes the examplewebapp##2.war file to perform a rollback (e.g., put into operation a prior version of the application) to examplewebapp##1.war corresponding to the first application.

At operation **430**, the deployment module **220** starts the second application without binding the second application to a port of the server computer. For example, the deployment module **220** uses delayed port binding to start the second application without first binding to a particular port of the server computer. In some instances, the deployment module **220** configures the server computer to enable or allow delayed port binding. Delayed port binding allows applications to start without first being bound to a particular port. For instance, delayed port binding can be performed on an particular server, executing Apache Tomcat, by overriding bindOnInit, although other techniques for performing delayed port binding can be employed.

Subsequent to the deployment module **220** starting the second application, at operation **440**, the communication module **210** disables the network traffic to the server computer. In some implementations, the load balancer of **FIG. 3** can be employed to divert the network traffic away from the server computer while network traffic is disabled.

At operation **450**, the binding module **230** unbinds the first application from the port of the server computer. After the binding module **230** unbinds the first application, at operation **460**, the binding module **230** binds the second application to the same port of the server computer.

Subsequently, at operation **470**, the communication module **210** enables network traffic to the server computer. As a result, the server computer serves network traffic received at the server computer that is running the second application.

At operation **480,** the deployment module **220** undeploys the first application. For instance, the deployment module **220** undeploys or uninstalls the first application by freeing resources used by the first application or removing or deleting the first application. Undeploying the first application is performed, in some instances, to conserve resources of the server computer.

In a further instance, the deployment module **220** does not undeploy or uninstall the first application, allowing for an expedient rollback (e.g., a rollback where there is no need to deploy and configure a particular application as it is already in a state operable to be deployed). In some instances, the storage module **240** maintains a current state of the first application after the binding module **230** unbinds the first application at the operation **460.** In this embodiment, the rollback is performed by the communication module **210** disabling or stopping the network traffic to the server computer, the binding module **230** unbinding the second application from the port of the server computer, the binding module **230** binding the first application to the same port of the server computer, and the communication module **210** enabling network traffic to the server computer.

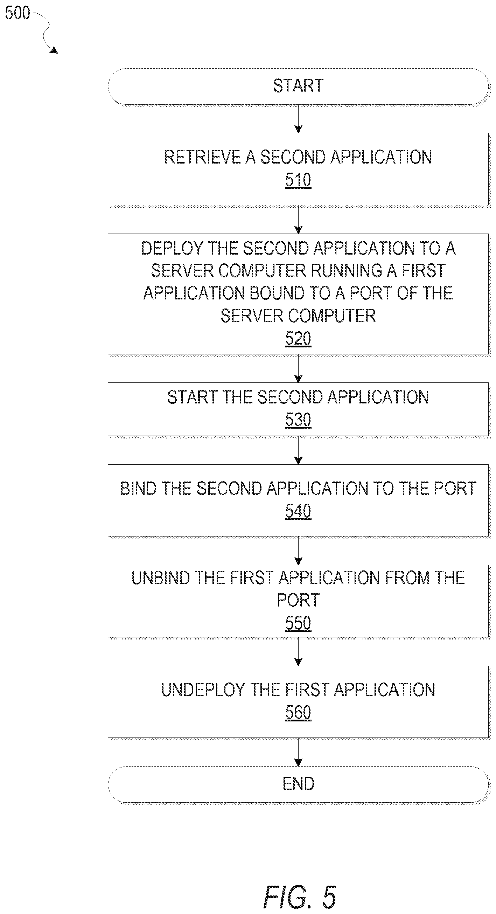

**FIG. 5** is a flow diagram illustrating an example method **500** for deploying an application on a particular server computer using simultaneous port binding, according to some example embodiments. At operation **510,** the storage module **240** retrieves, accesses, or otherwise obtains the second application. For instance, the storage module **240** retrieves, receives, or otherwise obtains the second application from a storage device such as database(s) **126.** In some instances, the second application is a new version or replacement version of the first application.

At operation **520,** the deployment module **220** deploys or installs the second application to the server computer, similar to the operation **420** described above. For example, the deployment module **220** configures the server computer such that it is operable to execute or run the second application or configures the second application such that it is operable to execute or run on the server computer. In various embodiments, the deployment module **220** configures the server computer such that the second application can execute alongside the first application in a standby mode.

In various embodiments, the server computer is parallel deployment enabled such that it is operable to run or execute multiple versions of a particular application at the same time (e.g., Apache Tomcat version 7 or higher as described in connection with the operation **420**). In these embodiments, the server computer is running the first application that is bound to the port of the server computer when the deployment module **220** deploys the second application to the server computer. In some embodiments, the second application is another version or iteration of the first application.

At operation **530,** the deployment module **220** starts or otherwise initiates the second application on the server computer. In some embodiments, the deployment module **220** starts the second application without binding the second application to the port of the server computer. For instance, the binding module **230** can employ delayed port binding, as described above in connection with operation **430**. In alternative embodiments, the deployment module **220** starts or initiates the second application while or after the binding module **230** binds the second application to the port of the server computer.

At operation **540**, the binding module **230** binds the second application to the port of the server computer after the second application is started or initiated by the deployment module **220**. In various embodiments, the binding module **230** binds the second application to the port while the first application is bound to the port. Thus, in these embodiments, both the first application and the second application are bound to the port at the same time.

In some instance, binding multiple applications to the same port triggers an "Address in Use" error. However, the "Address in Use" error can be avoided when binding two or more applications to the same port at the same time by using a server computer option, socket option, or port setting, according to some embodiments. For example, the deployment module **220** or the binding module **230** can configure the port of the server computer with the server computer option that allows for the two or more applications, servers, processes, or threads to be bound to the same port at the same time. In various embodiments, the server computer option comprises SO__REUSEPORT. In an embodiment, employing SO_REUSEPORT allows two or more applications to be bound to the same port provided that the application that first bound to the port set this option while binding. In addition, use of the server computer option can provide fair distribution of requests in a multithreaded environment.

At operation **550**, the binding module **230** unbinds the first application from the port. In some instances, the binding module **230** unbinds the first application from the port after the binding module **230** binds the second application. Under this scheme, there is no discontinuity, and network traffic can be served continuously while the second application is being implemented and the first application is being un-implemented from the server computer.

Subsequent to the binding module **230** unbinding the first application, at operation **560**, the deployment module **220** undeploys or uninstalls the first application from the server computer. The first application may be undeployed to conserve resources (e.g., memory). For instance, the deployment module **220** deletes or otherwise removes the first application from the server computer.

In other embodiments, the deployment module **220** does not undeploy the first application, and the storage module **240** maintains the current state of the first application allowing for an expedient rollback. A rollback from the second application to the first application can be performed by binding the first application to the port and unbinding the second application from the port.

In a specific example, the server computer comprises an Apache Tomcat server. Apache Tomcat code can be modified to avoid a connector from binding to the port when starting up. Later, a JMX or a separate command can be used to start the connector and bind to the port. If using Linux, the kernel version 3.9.0 and later can be used. The Apache Tomcat code can be modified to bind the server socket with the option SO_REUSEPORT. Once these steps are completed, multiple applications can be bound at the same time to the same port. Switching between the applications bound to the same port at the same time can be performed instantly or near instantly, and produce near zero downtime or zero downtime.

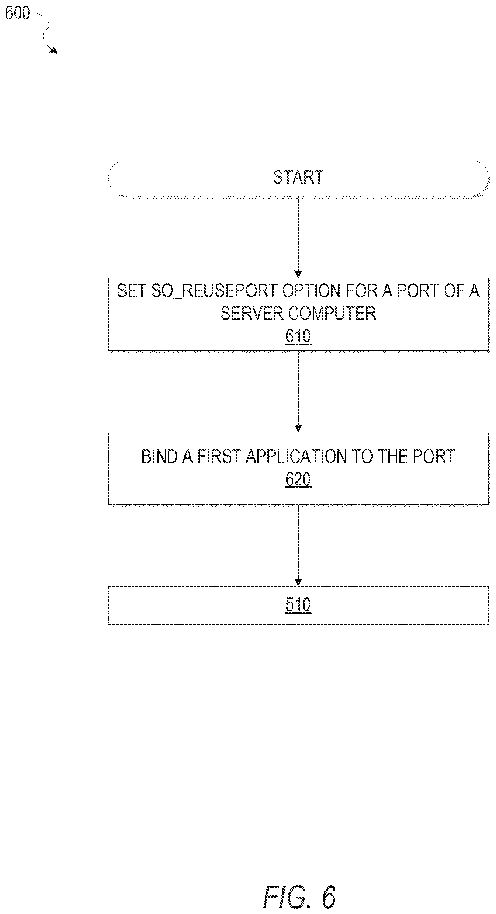

**FIG. 6** is a flow diagram illustrating an example method 600 for setting binding options for a port of a server computer, according to some example embodiments. In one embodiment, prior to the operations described in connection with **FIG. 5****,** the operations of **FIG. 6** are performed.

At operation **610**, the deployment module **220** or the binding module **230** sets or implements the server computer option (e.g., a port reuse option). In other words, the deployment module **220** or the binding module 230 configures the server computer with the server computer option (also referred to as an operating system option). As discussed above, once the server computer option is updated, two or more applications can be bound to the port at the same time. In various embodiments, the server computer option comprises SO REUSEPORT.

At operation **620**, the binding module **230** binds the first application to the server computer. In various embodiments, the first application is bound to the port with the server computer option (e.g., SO_REUSEPORT) that allows for multiple applications to be bound to the port at the same time. In some scenarios, the server computer is configured such that the socket option to allow binding of multiple applications at the same time is to be set prior to the binding of any applications. That is to say, in some scenarios, once a particular application is bound to the port, the server computer can no longer set the option that allows for multiple applications to be bound to the port at the same time. In these scenarios, the server computer option to allow multiple applications to be bound the same port is set when the first application is bound to the port.

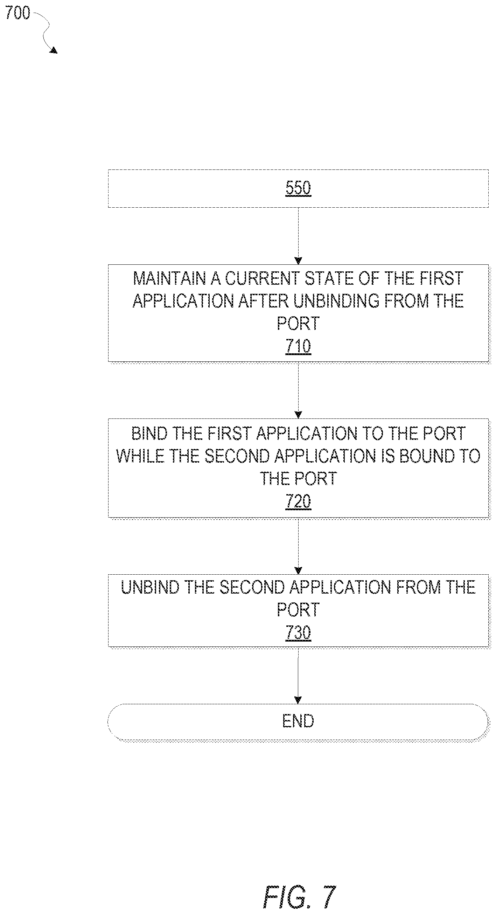

**FIG. 7** is a flow diagram illustrating an example method **700** for performing a rollback of an application on a server computer, according to some example embodiments. Subsequent to the operation **550**, the operations of **FIG. 7** are performed instead of the operation **560**, described above.

At operation **710**, the storage module **240** maintains a current state of the first application after unbinding the first application from the port. The purpose of maintaining the current state of the first application is so that the first application is ready to be bound to the port and serve network traffic in the event that the second application, currently bound to the port, is to be removed from service. In other words, by maintaining the current state of the first application, redeployment of the first application can be omitted when performing the rollback.

At operation **720**, the binding module **230** binds the first application to the port while the second application is bound to the port in response to a rollback command (e.g., initiated by a network administrator or another operator). The operation **720** is similar to the operation **540**, described above.

At operation **730**, the binding module **230** unbinds the second application from the port in response to the rollback command (e.g., initiated by a network administrator or another operator). The operation **730** is similar to the operation **550**, described above. Once the first application is bound to the port (operation **720**) and the second application is unbound from the port (operation **730),** the rollback of the second application is complete. In further embodiments, the deployment module **220** can undeploy or uninstall the second application after the second application is unbound to conserve resources. In alternative embodiments, the second application is not undeployed or uninstalled and a current state of the second application is maintained for expedient redeployment.

### MODULES, COMPONENTS, AND LOGIC

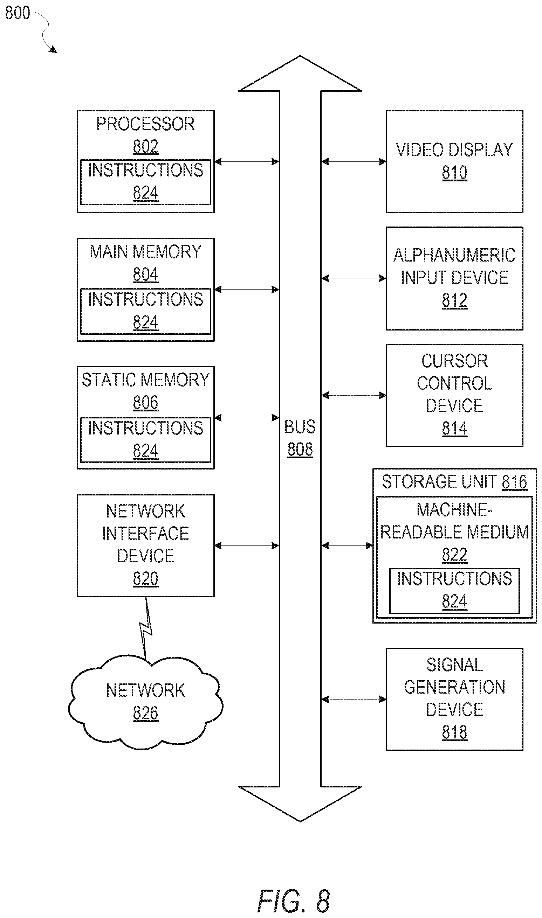

**FIG. 8** is a block diagram illustrating components of a machine **800**, according to some example embodiments, able to read instructions from a machine-readable medium (e.g., a machine-readable storage medium) and perform any one or more of the methodologies discussed herein. Specifically, **FIG. 8** shows a diagrammatic representation of the machine **800** in the example form of a computer system, within which instructions **824** (e.g., software, a program, an application, an applet, an app, or other executable code) for causing the machine **800** to perform any one or more of the methodologies discussed herein may be executed. In alternative embodiments, the machine **800** operates as a standalone device or may be connected (e.g., networked) to other machines. In a networked deployment, the machine **800** may operate in the capacity of a server machine or a client machine in a server-client network environment, or as a peer machine in a peer-to-peer (or distributed) network environment. The machine **800** may be a server computer, a client computer, a personal computer (PC), a tablet computer, a laptop computer, a netbook, a set-top box (STB), a personal digital assistant (PDA), a cellular telephone, a smartphone, a web appliance, a network router, a network switch, a network bridge, or any machine capable of executing the instructions **824,** sequentially or otherwise, that specify actions to be taken by that machine. Further, while only a single machine **800** is illustrated, the term "machine" shall also be taken to include a collection of machines **800** that individually or jointly execute the instructions **824** to perform any one or more of the methodologies discussed herein.

The machine **800** includes a processor **802** (e.g., a central processing unit (CPU), a graphics processing unit (GPU), a digital signal processor (DSP), an application specific integrated circuit (ASIC), a radiofrequency integrated circuit (RFIC), or any suitable combination thereof), a main memory **804,** and a static memory **806,** which are configured to communicate with each other via a bus **808.** The machine **800** may further include a video display **810** (e.g., a plasma display panel (PDP), a light emitting diode (LED) display, a liquid crystal display (LCD), a projector, or a cathode ray tube (CRT)). The machine **800** may also include an alphanumeric input device **812** (e.g., a keyboard), a cursor control device **814** (e.g., a mouse, a touchpad, a trackball, a joystick, a motion sensor, or other pointing instrument), a storage unit **816**, a signal generation device **818** (e.g., a speaker), and a network interface device **820**.

The storage unit **816** includes a machine-readable medium **822** on which is stored the instructions **824** embodying any one or more of the methodologies or functions described herein. The instructions **824** may also reside, completely or at least partially, within the main memory **804**, within the static memory **806**, within the processor **802** (e.g., within the processor's cache memory), or all three, during execution thereof by the machine **800**. Accordingly, the main memory **804**, static memory **806** and the processor **802** may be considered as machine-readable media **822**. The instructions **824** may be transmitted or received over a network **826** via the network interface device **820**.

As used herein, the term "memory" refers to a machine-readable medium **822** able to store data temporarily or permanently and may be taken to include, but not be limited to, random-access memory (RAM), read-only memory (ROM), buffer memory, flash memory, and cache memory. While the machine-readable medium **822** is shown in an example embodiment to be a single medium, the term "machine-readable medium" should be taken to include a single medium or multiple media (e.g., a centralized or distributed database, or associated caches and servers) able to store instructions **824.** The term "machine-readable medium" shall also be taken to include any medium, or combination of multiple media, that is capable of storing instructions (e.g., instructions **824**) for execution by a machine (e.g., machine **800**), such that the instructions, when executed by one or more processors of the machine **800** (e.g., processor **802**), cause the machine **800** to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" shall accordingly be taken to include, but not be limited to, one or more data repositories in the form of a solid-state memory, an optical medium, a magnetic medium, or any suitable combination thereof. The term "machine-readable medium" specifically excludes non-statutory signals per se.

Furthermore, the machine-readable medium **822** is non-transitory in that it does not embody a propagating signal. However, labeling the machine-readable medium **822** as "non-transitory" should not be construed to mean that the medium is incapable of movement; the medium should be considered as being transportable from one physical location to another. Additionally, since the machine-readable medium **822** is tangible, the medium may be considered to be a machine-readable device.

The instructions **824** may further be transmitted or received over a communications network **826** using a transmission medium via the network interface device **820** and utilizing any one of a number of well-known transfer protocols (e.g., Hypertext Transfer Protocol (HTTP)). Examples of communication networks include a local area network (LAN), a wide area network (WAN), the Internet, mobile telephone networks (e.g. 3GPP, 4G LTE, 3GPP2, GSM, UMTS/HSPA, WiMAX, and others defined by various standard setting organizations), plain old telephone service (POTS) networks, and wireless data networks (e.g., Wi-Fi and Bluetooth networks). The term "transmission medium" shall be taken to include any intangible medium that is capable of storing, encoding, or carrying instructions **824** for execution by the machine **800,** and includes digital or analog communications signals or other intangible medium to facilitate communication of such software.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium **822** or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field-programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a processor **802**, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors **802** that are temporarily configured (e.g., by software) or permanently configured to perform the relevant operations. Whether temporarily or permanently configured, such processors **802** may constitute processor-implemented modules that operate to perform one or more operations or functions described herein. As used herein, "processor-implemented module" refers to a hardware module implemented using one or more processors **802**.

Similarly, the methods described herein may be at least partially processor-implemented, with a processor **802** being an example of hardware. For example, at least some of the operations of a method may be performed by one or more processors **802** or processor-implemented modules. Moreover, the one or more processors **802** may also operate to support performance of the relevant operations in a "cloud computing" environment or as a "software as a service" (SaaS). For example, at least some of the operations may be performed by a group of computers (as examples of machines **800** including processors **802),** with these operations being accessible via the network **826** (e.g., the Internet) and via one or more appropriate interfaces (e.g., an application program interface (API)).

The performance of certain of the operations may be distributed among the one or more processors **802,** not only residing within a single machine **800,** but deployed across a number of machines **800.** In some example embodiments, the one or more processors **802** or processor-implemented modules may be located in a single geographic location (e.g., within a home environment, an office environment, or a server farm). In other example embodiments, the one or more processors **802** or processor-implemented modules may be distributed across a number of geographic locations.

Although an overview of the inventive subject matter has been described with reference to specific example embodiments, various modifications and changes may be made to these embodiments without departing from the broader scope of embodiments of the present disclosure. Such embodiments of the inventive subject matter may be referred to herein, individually or collectively, by the term "invention" merely for convenience and without intending to voluntarily limit the scope of this application to any single disclosure or inventive concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present disclosure as represented by the appended claims. The specification and drawings are, accordingly, to be regarded in an illustrative rather than a restrictive sense.

## Claims

1. A computer system comprising:
a deployment module (220) to:
deploy (520) a second application (332) to a server computer (330) that is running a first application (322) bound to a port of the server computer;
start (530) the second application (332) without the second application (332) being bound to the port; and
a binding module (230) to:
bind (540) the second application (332) to the port while the first application (322) is bound to the port;
unbind (550) the first application (322) from the port after the second application (332) is bound to the port;
maintain (710) a current state of the first application (322) after the first application (322) is unbound from the port;
in response to a rollback command, bind (720) the first application (322) to the port while the second application (332) is bound to the port; and
in response to the rollback command, unbind (730) the second application (332) from the port after the first application (322) is bound to the port.

2. The system of claim 1, wherein the binding module (230) is further configured to bind, with a server computer option that allows for binding of more than one application to the port at the same time, the first application (322) to the port.

3. The system of claim 2, wherein the server computer option comprises SO_REUSEPORT.

4. The system of claim 1, wherein the server computer receives network traffic while binding the second application (332) to the port and unbinding the first application (322) from the port.

5. A computer implemented method comprising:
deploying (520) a second application (332) to a server computer that is running a first application (322) bound to a port of the server computer;
initiating (530) the second application without binding the second application to the port;
binding (540) the second application (332) to the port while the first application (322) is bound to the port;
unbinding (550) the first application (322) from the port after the second application (332) is bound to the port;
maintaining (710) a current state of the first application (322) after the first application (322) is unbound from the port;
in response to a rollback command, binding (720) the first application (322) to the port while the second application (332) is bound to the port; and
in response to the rollback command, unbinding (730) the second application (332) from the port after the first application (322) is bound to the port.

6. The method of claim 5, further comprising:
binding, with a socket option allowing for binding of more than one application to the port at the same time, the first application (322) to the port.

7. The method of claim 6, wherein the socket option comprises SO_REUSEPORT.

8. The method of claim 5, wherein the server computer receives network traffic while binding the second application (332) to the port and unbinding the first application (322) from the port.

9. A machine-readable medium carrying instructions that, when executed by at least one processor of a machine, cause the machine to carry out the method of any one of claims 5 to 8.

## Patentansprüche

1. Computersystem, umfassend:
ein Implementierungsmodul (220) zum:
Implementieren (520) einer zweiten Anwendung (332) auf einem Servercomputer (330), auf dem eine erste Anwendung (322) an einen Port des Servercomputers gebunden läuft;
Aufrufen (530) der zweiten Anwendung (332), ohne dass die zweite Anwendung (332) an den Port gebunden ist; und
ein Bindungsmodul (230) zum:
Binden (540) der zweiten Anwendung (332) an den Port, während die erste Anwendung (322) an den Port gebunden ist;
Aufheben der Bindung (550) der ersten Anwendung (322) vom Port, nachdem die zweite Anwendung (332) an den Port gebunden ist;
Aufrechterhalten (710) eines gegenwärtigen Zustands der ersten Anwendung (322), nachdem die Bindung der ersten Anwendung (322) vom Port aufgehoben wurde;
als Reaktion auf einen Rollback-Befehl, Binden (720) der ersten Anwendung (322) an den Port, während die zweite Anwendung (332) an den Port gebunden ist; und
als Reaktion auf den Rollback-Befehl, Aufheben der Bindung (730) der zweiten Anwendung (332) vom Port, nachdem die erste Anwendung (322) an den Port gebunden wurde.

2. System nach Anspruch 1, wobei das Bindungsmodul (230), bei einer Servercomputeroption, die das gleichzeitige Binden von mehr als einer Anwendung an den Port erlaubt, weiter zum Binden der ersten Anwendung (322) an den Port konfiguriert ist.

3. System nach Anspruch 2, wobei die Servercomputeroption SO_REUSEPORT umfasst.

4. System nach Anspruch 1, wobei der Servercomputer während des Bindens der zweiten Anwendung (332) an den Port und des Aufhebens der Bindung der ersten Anwendung (322) vom Port Netzwerkverkehr empfängt.

5. Computerimplementiertes Verfahren, umfassend:
Implementieren (520) einer zweiten Anwendung (332) auf einem Servercomputer, auf dem eine erste Anwendung (322) an einen Port des Servercomputers gebunden läuft;
Aufrufen (530) der zweiten Anwendung, ohne dass die zweite Anwendung an den Port gebunden ist; und
Binden (540) der zweiten Anwendung (332) an den Port, während die erste Anwendung (322) an den Port gebunden ist;
Aufheben der Bindung (550) der ersten Anwendung (322) vom Port, nachdem die zweite Anwendung (332) an den Port gebunden ist;
Aufrechterhalten (710) eines gegenwärtigen Zustands der ersten Anwendung (322), nachdem die Bindung der ersten Anwendung (322) vom Port aufgehoben wurde;
als Reaktion auf einen Rollback-Befehl, Binden (720) der ersten Anwendung (322) an den Port, während die zweite Anwendung (332) an den Port gebunden ist; und
als Reaktion auf den Rollback-Befehl, Aufheben der Bindung (730) der zweiten Anwendung (332) vom Port, nachdem die erste Anwendung (322) an den Port gebunden wurde.

6. Verfahren nach Anspruch 5, weiter umfassend:
bei einer Socket-Option, die das gleichzeitige Binden von mehr als einer Anwendung an den Port erlaubt, Binden der ersten Anwendung (322) an den Port.

7. Verfahren nach Anspruch 6, wobei die Socket-Option SO_REUSEPORT umfasst.

8. Verfahren nach Anspruch 5, wobei der Servercomputer während des Bindens der zweiten Anwendung (332) an den Port und des Aufhebens der Bindung der ersten Anwendung (322) vom Port Netzwerkverkehr empfängt.

9. Maschinenlesbares Medium, das Anweisungen trägt, die, wenn sie von mindestens einem Prozessor einer Maschine ausgeführt werden, verursachen, dass die Maschine das Verfahren nach einem der Ansprüche 5 bis 8 ausführt.

## Revendications

1. Système informatique comprenant :
un module de déploiement (220) pour :
déployer (520) une seconde application (332) vers un ordinateur serveur (330) qui exécute une première application (322) liée à un port de l'ordinateur serveur ;
démarrer (530) la seconde application (332) sans que la seconde application (332) ne soit liée au port ; et
un module de liaison (230) pour :
lier (540) la seconde application (332) au port tandis que la première application (322) est liée au port ;
délier (550) la première application (322) du port après que la seconde application (332) est liée au port ;
maintenir (710) un état courant de la première application (322) après que la première application (322) est déliée du port ;
en réponse à un ordre de repositionnement, lier (720) la première application (322) au port tandis que la seconde application (332) est liée au port ; et
en réponse à l'ordre de repositionnement, délier (730) la seconde application (332) du port après que la première application (322) est liée au port.

2. Système selon la revendication 1, dans lequel le module de liaison (230) est en outre configuré pour lier, avec une option d'ordinateur serveur qui permet la liaison de plus d'une application au port au même instant, la première application (322) au port.

3. Système selon la revendication 2, dans lequel l'option d'ordinateur serveur comprend SO_REUSEPORT.

4. Système selon la revendication 1, dans lequel l'ordinateur serveur reçoit du trafic de réseau tout en liant la seconde application (332) au port et en déliant la première application (322) du port.

5. Procédé mis en oeuvre par ordinateur comprenant :
le déploiement (520) d'une seconde application (332) à un ordinateur serveur qui exécute une première application (322) liée à un port de l'ordinateur serveur ;
l'amorçage (530) de la seconde application sans lier la seconde application au port;
la liaison (540) de la seconde application (332) au port tandis que la première application (322) est liée au port ;
le fait de délier (550) la première application (322) du port après que la seconde application (332) est liée au port ;
le maintien (710) d'un état courant de la première application (322) après que la première application (322) est déliée du port ;
en réponse à un ordre de repositionnement, la liaison (720) de la première application (322) au port tandis que la seconde application (332) est liée au port ; et
en réponse à l'ordre de repositionnement, le fait de délier (730) la seconde application (332) du port après que la première application (322) est liée au port.

6. Procédé selon la revendication 5, comprenant en outre :
la liaison, avec une option d'interface de connexion permettant la liaison de plus d'une application au port au même instant, de la première application (322) au port.

7. Procédé selon la revendication 6, dans lequel l'option d'interface de connexion comprend SO_REUSEPORT.

8. Procédé selon la revendication 5, dans lequel l'ordinateur serveur reçoit du trafic de réseau tout en liant la seconde application (332) au port et le fait de délier la première application (322) du port.

9. Support lisible par la machine portant des instructions qui, lorsqu'elles sont exécutées par au moins un processeur d'une machine, amènent la machine à effectuer le procédé selon l'une quelconque des revendications 5 à 8.
